# FASCICULE DE BREVET EUROPEEN

(11) **EP 0 576 336 B1**
(45) Date de publication et mention de la délivrance du brevet: **06.09.1995**
(21) Numéro de dépôt: 93401571.0
(22) Date de dépôt: 18.06.1993
(51) Int. Cl.: B65D 21/04, A01G 9/10

(54) **Module de manutention, culture hors sol, notamment dans des serres, transport et commercialisation de plants de légumes, de fruits ou de fleurs**
Modul zur Behandlung, für die erdlose Kultur (insbesondere in Gewächshäusern), für den Transport und Verkauf von Gemüse, Früchten oder Blumen
Module for handling, for soilless culture (especially in greenhouses), for transport and commercializing of vegetables, fruits or flowers

(30) Priorité: 25.06.1992 FR 9207794
(43) Date de publication de la demande: 29.12.1993
(73) Titulaire: LES JARDINS DE SOLOGNE, F-41210 La Ferte Beauharnais (FR)
(72) Inventeur: Massonneau, Philippe, La Ferte Saint Aubin (Loiret) (FR); Palais, Bruno, La Ferte Beauharnais (Loir et Cher) (FR)
(74) Mandataire: Cabinet HERRBURGER

(56) Documents cités:
- WO-A-91/17087
- FR-A- 2 354 700
- FR-A- 2 661 155
- GB-A- 2 241 222

## Description

L'invention concerne un module notamment destiné à la manutention, à la culture hors sol, au transport et à la commercialisation de plants de légumes, de fruits ou de fleurs cultivés dans des godets placés dans des barquettes ou dans des pots.

Dans le domaine de l'horticulture ou du maraîchage, les plants destinés à être cultivés hors sol dans des serres sont classiquement soumis à une étape préliminaire de mise en pot qui est totalement robotisée : au cours de cette première étape, on saisit, les uns après les autres, des godets généralement en plastique extrudé, qui sont fournis empilés les uns dans les autres, puis on les remplit de terre et on y introduit des plants avant de les placer dans des barquettes, également généralement en plastique, qui, dans le cas le plus classique, contiennent des unités de dix godets ; dans certains cas, les godets sont remplacés par des pots qui sont directement remplis de terre et équipés des plants à cultiver.

A la sortie de cette chaîne robotisée préalable, les pots ou les barquettes étaient jusqu'à une date récente transportés manuellement jusqu'à la serre par unité de deux ou de quatre, ce qui représentait une opération incommode et onéreuse tant en temps qu'en main d'oeuvre.

A ce stade du processus, les spécialistes dans le domaine de la culture hors sol avaient le choix entre deux solutions dont la première consistait à placer les barquettes sur des toiles bituminées (type "sac de charbon") étalées à même le sol, ce qui exposait à des contraintes liées à l'état d'humidité de celui-ci.

La seconde possibilité consistait à mettre en oeuvre les cultures sur des tablettes roulantes ou fixes placées dans les différentes chapelles de la serre ; ces tablettes correspondaient à un matériel lourd qui présentait l'inconvénient d'être attaché au lieu de culture et donc d'être uniquement un outil de production.

Lorsque les plants avaient atteint un niveau de croissance déterminé, dans une troisième étape, on les sortait manuellement de la serre, barquette par barquette ou pot par pot en vue de leur vente, et on les mettait en place sur des supports à étagères dans lesquels ils étaient transportés dans des véhicules, notamment dans des camions jusqu'à leur lieu de commercialisation.

Les spécialistes dans le domaine du maraîchage et de l'horticulture ont cherché à remédier aux inconvénients susmentionnés en rationalisant et optimisant toutes les étapes inhérentes à la culture et à la commercialisation des plants, du lieu de leur production jusqu'à leur mise sur le marché sur le lieu de vente.

A cet effet, on a déjà proposé notamment conformément au document FR-A-2 661 155, un procédé du type ci-dessus, par lequel, à l'issue de la première étape, on place automatiquement les pots ou les barquettes côte à côte sur des modules empilables et emboîtables constitués chacun d'une plate-forme munie de pieds, sur lesquels on les transfère sur le lieu de la culture, notamment au moyen d'un chariot élévateur, puis on défait les piles et l'on étale les modules de sorte qu'ils fassent office de supports de culture pendant la croissance des plants. Le préambule de la revendication 1 est basé sur cet état de la technique.

La mise en oeuvre de ce procédé est liée à l'utilisation de modules de nature à établir un lien entre la chaîne automatique préalable de mise en pot et la culture des plants sous la serre : les barquettes ou les pots peuvent, en effet, être mis en place automatiquement sur la plate-forme des modules avant l'empilement de ceux-ci et leur manoeuvre à l'aide de chariots de manutention qui assurent leur transfert dans la serre, où ils remplacent les tablettes roulantes et fixes auparavant utilisées en tant que support de culture : ce procédé permet ainsi de supprimer les contraintes liées au sol (zones humides, zones sèches) tout en évitant le distançage des plants pendant la période de production et en garantissant un bon état sanitaire.

Les modules peuvent, en outre, être utilisés en tant que supports de transport : à l'issue de la seconde étape, c'est-à-dire lorsque les plants ont atteint un niveau de croissance déterminé, on empile à nouveau les modules, avec les pots ou les barquettes qu'ils supportent et on les met en place dans des véhicules, notamment dans des camions dans lesquels ils sont transportés jusqu'à leur lieu de commercialisation. Bien entendu, au niveau de cette troisième étape du procédé, compte tenu de leur caractère empilable et emboîtables, les modules peuvent avantageusement être manoeuvrés au moyen de chariots élévateurs classiques. Les modules une fois empilés remplacent donc les supports à étagères qui étaient classiquement utilisés.

Ces supports correspondaient en effet à des meubles en bois constitués par des montants notamment agrafés ou cloués sur une embase et sur lesquels étaient fixés des plateaux formant étagères destinés à recevoir les barquettes ou les ports qui étaient mis en place manuellement ; il s'agissait là d'éléments particulièrement fragiles qui coûtaient plus chers à récupérer qu'à laisser sur place et n'étaient pour cette raison conçus que pour supporter un seul voyage. L'utilisation d'emballages perdus présente cependant de nombreux inconvénients, non seulement pour des raisons écologiques mais également en raison de taxations prévues par les Directives Européennes et Communautaires ; l'utilisation de modules qui correspondent à des emballages récupérables et non polluants s'avère donc particulièrement avantageuse.

Ceci est d'autant plus vrai qu'il est possible, à l'issue de la troisième étape et après la commercialisation, c'est-à-dire lorsque l'ensemble des barquettes ou des pots a été vendu, de ramener les modules vides sur le lieu de la culture, emboîtés les uns dans les autres, permettant ainsi un gain de place et donc d'argent intéressant.

Il est possible de prévoir un système de consigne pour le retour des modules vides, après la vente, ce qui permet encore d'augmenter le bénéfice lié à la mise en oeuvre du procédé susmentionné.

En outre, les modules peuvent également être utilisés en tant que présentoirs, c'est-à-dire de supports de commercialisation, lorsqu'ils sont empilés et équipés de pots ou de barquettes.

Les modules peuvent ainsi remplacer avantageusement les ferrailles à cadre classiques ; les commerçants peuvent, par suite, présenter directement les plants à leur sortie des véhicules de transport et concevoir diverses configurations de "gondoles" en fonction des produits à présenter.

Il est à noter que le fait de pouvoir défaire les piles de modules permet d'exposer directement les plants à la lumière, ce qui intervient favorablement sur la durée et la qualité de leur conservation.

Dans leur aspect support de commercialisation les modules permettent donc de disposer d'un mobilier de vente adaptable aux structures des magasins et évolutif dans sa présentation.

Malgré leurs avantages, les modules déjà connus selon l'art antérieur ne sont pas sans présenter d'importants inconvénients, principalement consécutifs au fait qu'ils ne peuvent pas être empilés ou emboîtés dans n'importe quelle position et qu'il convient donc de veiller au sens dans lequel ils sont manipulés.

En particulier, le module connu conformément au document susmentionné FR-A-2 661 155 se distingue par les caractéristiques suivantes :
- il comprend une plate-forme constituée d'un cadre tubulaire périphérique coopérant avec des traverses parallèles et reposant sur au moins quatre supports répartis latéralement le long de deux bords opposés de la plate-forme,
- chaque support comprend un pied présentant la forme d'un profil ouvert de section évasée vers le haut adapté pour permettre l'imbrication des pieds les uns dans les autres et l'emboîtement des modules superposés dans une position de stockage dans laquelle les plates-formes reposent les unes sur les autres,
- chaque support comprend un organe d'appui juxtaposé au pied à sa partie supérieure essentiellement parallèlement à la plate-forme pour permettre l'empilement de modules superposés dans une position de culture décalée de 180° par rapport à la position de stockage et dans laquelle les pieds d'un module reposent sur les organes d'appui du module situé directement au-dessous.

Il est à noter qu'un module présentant des inconvénients similaires est également décrit dans le document FR-A-2 354 700.

L'invention a pour objet de remédier aux inconvénients de l'art antérieur en proposant un module léger et peu onéreux mais également rigide et en outre ayant une configuration permettant l'empilement des modules dans toutes les positions.

A cet effet, l'invention concerne un module qui est constitué par un élément métallique comportant une plate-forme grillagée essentiellement rectangulaire susceptible de recevoir et de maintenir les barquettes ou les pots et équipée à ses quatre coins de pieds de forme évasée vers le haut de façon à permettre aux pieds de modules situés les uns au-dessus des autres, de s'imbriquer les uns dans les autres pour permettre l'emboîtement des modules, le module étant caractérisé en ce que les pieds sont de forme essentiellement trapézoïdale et sont munis à leur extrémité opposée à la plate-forme d'un décrochement susceptible de coopérer avec la plate-forme d'un module situé directement au-dessous pour permettre l'empilement des modules de façon telle que ceux-ci puissent être indifféremment mis en place dans un sens ou en sens opposé.

Conformément à l'invention, les modules peuvent être maintenus en position empilée les uns sur les autres par simple coopération des décrochements d'un module avec les fils constitutifs du grillage du module placé immédiatement au-dessous.

Bien que les dimensions des modules ne soient bien entendu pas limitatives de l'invention, on a pu constater que le choix d'une plate-forme de forme rectangulaire et ayant une largeur de 0,80 m et une longueur de 1,20 m était particulièrement avantageux : un tel module permet en effet la manutention en une seule fois de 16 barquettes soit 160 plants ou de 88 plants placés dans des pots de 10 cm de diamètre en une seule fois ; l'empilage des modules permet bien entendu de multiplier le nombre de barquettes ou de pots pouvant être manipulés simultanément.

La hauteur des pieds doit bien entendu, quant à elle, être choisie de manière à pouvoir disposer, entre les différentes plates-formes, d'un espace suffisant pour les barquettes ou les pots.

Il est à noter que, lors de l'étape de transport des modules empilés jusqu'au lieu de commercialisation, on peut placer les piles sur une embase reposant sur le fond du véhicule.

Une telle embase qui peut avantageusement être constituée par un module similaire à ceux qui font l'objet de l'invention mais munie de pieds de hauteur moindre, s'avère dans certains cas nécessaire pour garantir la stabilité des piles transportées dans les véhicules.

Selon une autre caractéristique de l'invention, la plate-forme grillagée coopère à sa partie inférieure avec une ossature de rigidification et de soutien notamment réalisée à partir de profilés métalliques, de préférence de profilés plans.

L'adjonction de cette ossature est en effet indispensable pour permettre à la plate-forme grillagée de soutenir les barquettes ou les pots.

Selon une autre caractéristique de l'invention, les bords de la plate-forme sont équipés de barrettes de maintien.

Il s'agit là d'une caractéristique importante de l'invention compte tenu du fait que la présence des barrettes de maintien évite d'avoir à poser autour des modules des films rétractables préjudiciables à la bonne conservation des plantes, ce qui était nécessaire avec les supports à étagères conformes à l'art antérieur.

Les caractéristiques du module qui fait l'objet de l'invention seront décrites plus en détail en se référant aux dessins annexés dans lesquels :
- la figure 1 est une vue en perspective d'un module,
- la figure 2 représente trois modules empilés les uns sur les autres,
- la figure 3 représente deux modules emboîtés les uns dans les autres.

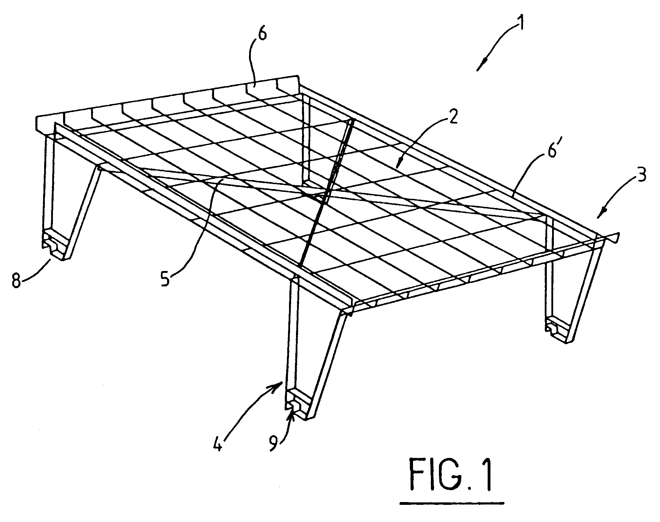

Selon la figure 1, le module 1 conforme à l'invention est un élément métallique constitué par une plate-forme grillagée 2 équipée à ses quatre coins 3 de pieds 4 de forme trapézoïdale réalisés à partir de profilés plans.

Une ossature de rigidification 5 en forme de croix dans l'exemple de configuration représenté sur la figure est placée au-dessous de la plate-forme 2 et permet de garantir le maintien sur celle-ci de pots ou de barquettes non représentés.

Les dimensions de la plate-forme grillagée 2, d'une part, et des pieds 4, d'autre part, sont choisies de façon à pouvoir disposer entre les plates-formes 2, des modules 1, 1' superposés d'un espace suffisant pour les barquettes ou les pots tout en permettant un remplissage optimal des véhicules ou des camions lors du transport des piles.

Des barrettes 6, 6' sont, par ailleurs, prévues au niveau des bords de la plate-forme 2 pour garantir le maintien des pots ou des barquettes.

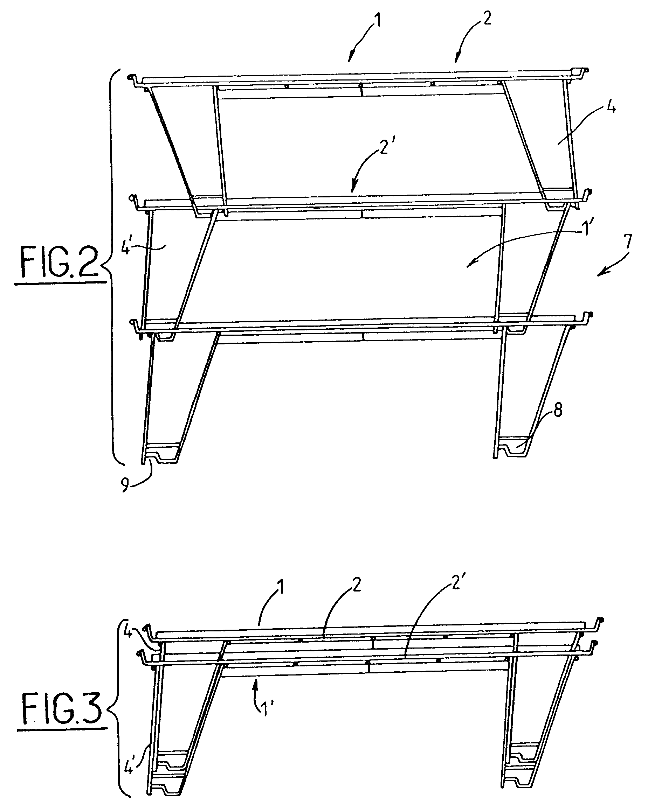

Les des modules 1 sont conçus de façon à pouvoir être empilés les uns sur les autres, comme représenté sur la figure 2, ou emboîtés les uns dans les autres, comme représenté sur la figure 3.

Selon la figure 2, en position empilée, les pieds 4 d'un module 1 reposent sur la plate-forme 2' du module 1' situé directement au-dessous.

Pour permettre le maintien des modules dans cette position et garantir la rigidité des piles 7 ainsi obtenues, les pieds 4 sont munis, à leur extrémité 8 opposée à la plate-forme 2, d'un décrochement 9 susceptible de coopérer avec les fils constitutifs du grillage de la plate-forme 2' du module 1' situé directement au-dessous.

La géométrie des pieds est choisie de sorte que le sens dans lequel les modules 1 sont saisis par le chariot élévateur soit indifférent : dans la configuration représentée sur la figure 2, les deux modules inférieurs sont tournés dans un sens, tandis que le module supérieur est tourné en sens inverse.

Selon la figure 3, en position emboîtée, les plates-formes 2, 2' de deux modules 1, 1' voisins sont essentiellement contiguës parallèlement les unes aux autres, tandis que les pieds 4, 4' de ces modules sont imbriqués les uns dans les autres.

## Revendications

1. Module notamment destiné à la manutention, à la culture hors sol, au transport et à la commercialisation de plants de légumes, de fruits ou de fleurs cultivés dans des godets placés dans des barquettes ou dans des pots, module constitué par un élément métallique comportant une plate-forme grillagée (2) essentiellement rectangulaire susceptible de recevoir et de maintenir les barquettes ou les pots et équipée à ses quatre coins (3) de pieds (4) de forme évasée vers le haut de façon à permettre aux pieds (4, 4') de modules (1, 1') situés les uns au-dessus des autres, de s'imbriquer les uns dans les autres pour permettre l'emboîtement des modules, le module étant caractérisé en ce que les pieds sont de forme essentiellement trapézoïdale et sont munis à leur extrémité (8) opposée à la plate-forme (2) d'un décrochement (9) susceptible de coopérer avec la plate-forme (2') d'un module (1') situé directement au-dessous pour permettre l'empilement des modules de façon telle que ceux-ci puissent être indifféremment mis en place dans un sens ou en sens opposé.

2. Module selon la revendication 1, caractérisé en ce que les pieds (4, 4') sont réalisés à partir de profilés métalliques, de préférence de profilés plans.

3. Module selon l'une quelconque des revendication 1 et 2, caractérisé en ce que la plate-forme grillagée (2, 2') coopère à sa partie inférieure avec une ossature de rigidification et de soutien (5), notamment réalisée à partir de profilés métalliques, de préférence de profilés plans.

4. Module selon l'une quelconque des revendications 1 à 3, caractérisé en ce que les bords de la plate-forme (2, 2') sont équipés de barrettes de maintien (6, 6').

## Claims

1. A module intended in particular for handling, cultivation out of the ground, transportation and marketing of flower, fruit and vegetable seedlings cultivated in cups placed in receptacles or in pots, the module being formed by a metal element comprising an essentially rectangular latticework platform (2) for receiving and holding the receptacles or the pots and provided at its four comers (3) with legs of upwardly flared shape so as to permit the legs (4, 4') of mules (1, 1') which are disposed above each other to fit into each other to permit interengagement of the modules, the module being characterised in that the legs are of essentially trapezoidal shape and are provided at their ends (8) opposite to the platform (2) with a recess (9) capable of co-operating with the platform (2') of a module (1') disposed directly below to permit stacking of the modules in such a way that they can be equally well set in position in one direction or in the opposite direction.

2. A module according to claim 1 characterised in that the legs (4, 4') are made from shaped metal portions, preferably flat portions.

3. A module according to either one of claims 1 and 2 characterised in that the latticework platform (2, 2') co-operates in its lower part with a stiffening and support frame (5) which in particular is produced from shaped metal portions, preferably flat portions.

4. A module according to any one of claims 1 to 3 characterised in that the edges of the platform (2, 2') are fitted with holding bar portions (6, 6').

## Patentansprüche

1. Bauteil, insbesondere zur Behandlung, zur erdbodenfreien Kultur, zum Transport und zum Verkauf von Gemüse, Früchten oder Blumen, die in auf Schalen angeordneten Näpfen oder in Töpfen kultiviert werden, wobei das Bauteil besteht aus einem Metallteil mit einer im wesentlichen rechteckigen gitterförmigen Plattform (2) zum Aufnehmen und Halten der Schalen oder Töpfe, die an ihren vier Ecken drei mit sich nach oben erweiternden Füßen (4) derart versehen ist, daß sich die Füße (4, 4') von übereinander angeordneten Bauteilen (1,1') zur Ermöglichung des Ineinandersteckens von Bauteilen ineinanderfügen können, dadurch gekennzeichnet, daß die Füße im wesentlichen Trapezform besitzen und an ihrem der Plattform (2) entgegengesetzten Ende (8) mit einer Abstufung (9) versehen sind, die mit der Plattform (2') eines direkt darunter angeordneten Bauteils (1') zusammenwirken kann, um das Stapeln von Bauteilen derart zu ermöglichen, daß es gleichgültig ist, ob sie in einer oder der entgegengesetzten Richtung aufgesetzt werden.

2. Bauteil nach Anspruch 1, dadurch gekennzeichnet, daß die Füße (4,4') aus Metallprofilteilen, vorzugsweise ebenen Profilteilen, hergestellt sind.

3. Bauteil nach Anspruch 1 oder 2, dadurch gekennzeichnet, daß die gitterförmige Plattform (2,2') in ihrem unteren Teil mit einem Versteifungs- und Stütztragwerk (5) zusammenwirkt, das aus Metallprofilteilen, vorzugsweise aus ebenen Profilteilen, hergestellt ist.

4. Bauteil nach einem der Ansprüche 1 bis 3, dadurch gekennzeichnet, daß die Ränder der Plattform (2,2') mit Haltestegen (6,6') versehen sind.
